# EUROPÄISCHE PATENTANMELDUNG

(11) **EP 3 228 428 A1**
(43) Veröffentlichungstag der Anmeldung: **11.10.2017**
(21) Anmeldenummer: 16163906.7
(22) Anmeldetag: 05.04.2016
(51) Int. Cl.: B25J 15/00, B25J 15/06, B66C 1/02

(54) **SAUGGREIFER FÜR EINE HANDHABUNGSVORRICHTUNG**

(71) Anmelder: KEURO Besitz GmbH & Co. EDV-Dienstleistungs KG, 77855 Achern (DE)
(72) Erfinder: Bühler, Volker, 77876 Kappelrodeck (DE); Armbruster, Stefan, 77815 Bühl (DE); Krebber, Sönke Florian, 76530 Baden-Baden (DE); Stolzer, Armin, 76530 Baden-Baden (DE)
(74) Vertreter: Lemcke, Brommer & Partner Patentanwälte Partnerschaft mbB

(57) **Zusammenfassung**

Die vorliegende Erfindung betrifft einen Sauggreifer für eine Handhabungsvorrichtung zum Handhaben von Werkstücken mit einer zylindrischen oder einer Zylinderform angenäherten Form. Der Sauggreifer ist mit einer Saugplatte 1 versehen, deren Grundform der Oberfläche der zu greifenden Werkstücke angepasst ist. Diese weist eine Innenseite auf, die in einer axialen Richtung 4 im Wesentlichen geradlinig und in einer senkrecht zur axialen Richtung stehenden Radialebene mit einer im Wesentlichen konkaven Wölbung geformt ist.

Die Saugplatte 1 ist mit einer umlaufenden Dichtung 5 an der Innenseite und mit einem Vakuumanschluss zur Verbindung der innerhalb der umlaufenden Dichtung befindlichen Innenseite der Saugplatte mit einer Vakuumeinrichtung versehen. Bevorzugt besteht die Saugplatte 1 aus mehreren, über Scharniere 3 miteinander verbundenen Segmenten 2.

## Beschreibung

Die Erfindung betrifft einen Sauggreifer für eine Handhabungsvorrichtung zum Handhaben von Werkstücken, die eine zylindrische oder einer Zylinderform angenäherte Form aufweisen, nach dem Oberbegriff des Anspruchs 1.

Handhabungsvorrichtungen zum Handhaben von Werkstücken gibt es in unterschiedlichster Ausgestaltung; dies reicht von handbedienten Kränen zum Anheben und Ablegen von Werkstücken über einfache Handlingsvorrichtungen zum Umlagern von Werkstücken bis zu Robotersystemen, die gegebenenfalls mit optischen Sensoren ausgestattet sind. All diesen Handhabungsvorrichtungen ist gemeinsam, dass sie Greifersysteme benötigen, die an das zu handhabende Werkstück angepasst sind.

Um Werkstücke aufnehmen und ablegen zu können, die nicht untergriffen werden können oder sollen und die wegen ihrer Form oder Beschaffenheit oder aufgrund fehlendem Bewegungsraum auch nicht seitlich gegriffen oder geklemmt werden können, ist es bekannt, Sauggreifer zu verwenden, die beim Aufsetzen auf das Werkstück eine nach außen abgedichtete Saugtasche bilden. In dieser wird mittels einer Vakuumeinrichtung, die üblicherweise an der Handhabungsvorrichtung angeordnet ist und über Schlauchleitungen mit dem Sauggreifer verbunden ist, ein Unterdruck erzeugt, so dass sich der Sauggreifer an die Oberfläche des Werkstücks ansaugt. Dies ermöglicht, dass die Handhabungsvorrichtung das Werkstück anheben und bewegen kann.

Im Stand der Technik werden üblicherweise Sauggreifer mit Saugnäpfen verwendet. Diese bilden Saugtaschen mit geringen Volumina, in denen dementsprechend rasch der erforderliche Unterdruck herstellbar ist. Um großflächige oder nicht ebene Werkstücke zu handhaben, werden dann Sauggreifersysteme mit mehreren Saugnäpfen eingesetzt, wie dies beispielsweise in der DE 198 17 426 A1 offenbart ist.

Für Werkstücke mit insbesondere sphärischen Oberflächen werden alternativ besonders flexible Saugköpfe, wie in der DD 294 462 A5 beschrieben, oder aber Sauggreifer verwendet, deren Saugtasche durch einen Balg gebildet ist. Ein solcher Sauggreifer, der aufgrund des Balgs besonders flexibel und daher mit einem zusätzlichen, beweglichen Abstützelement ausgestattet ist, ist beispielsweise in der DE 20 2007 002 876 U1 offenbart.

Zum Anheben und Transportieren von Metallblechen ist es bekannt, Hängebandförderer zu verwenden, deren Transportbänder mit flächigen Saugtaschen versehen sind, um die Metallbleche hängend zu halten. Relativ großflächige Saugtaschen ermöglichen hierbei hohe Haltekräfte.

Zur Handhabung von Werkstücken mit einer zylindrischen oder einer Zylinderform angenäherten Form sind solche ebenen Saugtaschen nicht geeignet. Hier müssen vielmehr herkömmliche Saugnäpfe verwendet werden, die sich der konvexen Oberfläche anpassen können. Aufgrund der relativ kleinen Fläche von Saugnäpfen müssen je Sauggreifer jedoch mehrere Saugnäpfe verwendet werden, wenn Werkstücke gehandhabt werden sollen, die ein vergleichsweise hohes Gewicht aufweisen, wie beispielsweise Stangen, Rohre und Profile aus Metall.

Der vorliegenden Erfindung liegt daher die Aufgabe zugrunde, einen Sauggreifer für eine Handhabungsvorrichtung zur Verfügung zu stellen, der in der Lage ist, Werkstücke mit einer zylindrischen oder einer Zylinderform angenäherten Oberfläche mit hohen Kräften festzuhalten.

Gelöst ist diese Aufgabe durch einen Sauggreifer mit den Merkmalen des Anspruchs 1. Bevorzugte Ausgestaltungen und Weiterbildungen des erfindungsgemäßen Sauggreifers sind in den Ansprüchen 2 bis 19 niedergelegt.

Ein Sauggreifer nach der vorliegenden Erfindung umfasst eine Saugplatte, deren Grundform der Oberfläche der zu greifenden Werkstücke angepasst ist. Hierzu weist sie eine Innenseite auf, die in einer axialen Richtung im Wesentlichen geradlinig und in einer senkrecht zur axialen Richtung stehenden Radialebene mit einer im Wesentlichen konkaven Wölbung geformt ist. Die Innenseite der Saugplatte ist demnach einer zylindrischen Oberfläche angepasst, wobei vorzugsweise die Projektion der Saugplatte eine rechteckige Form aufweist. Zylindrisch im Sinne der vorliegenden Erfindung ist nicht nur als kreiszylindrisch zu verstehen, sondern kann auch eine parabolische Zylinderoberfläche, eine elliptische Zylinderoberfläche und dergleichen mehr sein.

An der Innenseite der Saugplatte des erfindungsgemäßen Sauggreifers ist eine umlaufende Dichtung vorgesehen, die eine Saugtasche bildet, welche beim Auflegen der Saugplatte auf ein Werkstück evakuiert werden kann. Ein Vakuumanschluss ermöglicht die Verbindung der innerhalb der umlaufenden Dichtung befindlichen Innenseite der Saugplatte mit einer Vakuumeinrichtung. Diese ist in der Regel an der Handhabungsvorrichtung angeordnet, welche mit dem erfindungsgemäßen Sauggreifer ausgestattet wird, um Werkstücke mit einer zylindrischen oder einer Zylinderform angenäherten Form handhaben zu können. Der Vakuumanschluss kann insbesondere mittels einer Durchführung in der Saugplatte hergestellt werden.

Wenn die umlaufende Dichtung an der Innenseite der Saugplatte genügend voluminös und komprimierbar ist, können beispielsweise auch Profile, die einer Zylinderform nur angenähert sind, mit dem erfindungsgemäßen Sauggreifer gegriffen werden; denn die umlaufende Dichtung gleicht Unstetigkeiten an der Werkstückoberfläche aus.

Mit der erfindungsgemäßen Saugplatte ist es möglich, eine großflächige Saugtasche herzustellen, um eine hohe Haltekraft erzielen zu können, wobei das zu evakuierende Volumen der Saugtasche gleichwohl vorteilhaft gering ist, da der Abstand zwischen der Saugplatte und der Oberfläche des Werkstücks innerhalb der umlaufenden Dichtung aufgrund der angepassten Form der Saugplatte an jeder Stelle nur gering ist. Wenn die Saugplatte eine in der Projektion rechteckige Fläche aufweist und die umlaufende Dichtung diese Rechteckform aufnimmt, ergeben sich zusätzlich verbesserte Haltekräfte durch die Vergrößerung der Fläche der Saugtasche bis in die Ecken des Rechtecks.

Die mit dem erfindungsgemäßen Sauggreifer erzielbaren Haltekräfte sind somit um ein Vielfaches höher als die Haltekräfte, die mit einem herkömmlichen Saugnapf hergestellt werden können, zumal dieser für Werkstücke mit zylindrischer Form mit vergleichsweise kleiner Saugfläche versehen sein muss, um trotz der gewölbten Oberfläche des Werkstücks allseitig abdichten zu können.

Auch gegenüber einem herkömmlichen Sauggreifer mit einer Mehrzahl von Saugnäpfen ergibt sich mit dem erfindungsgemäßen Sauggreifer eine höhere Haltekraft bei gleichem Aufwand für die Absaugung, wobei der mechanische Aufwand beim erfindungsgemäßen Sauggreifer um ein Vielfaches geringer ist als bei einem Sauggreifer mit einer Mehrzahl von Saugnäpfen, der auch noch an eine gewölbte Werkstückoberfläche angepasst werden muss.

Um zu gewährleisten, dass der erfindungsgemäße Sauggreifer in korrekter Orientierung auf das Werkstück aufgesetzt werden kann, so dass die Innenseite der Saugplatte und die Oberfläche des Werkstücks lagerichtig aufeinander zu liegen kommen, ist es bevorzugt, wenn der Vakuumanschluss im Wesentlichen mittels einer Durchführung in der Saugplatte gebildet ist und die Durchführung außerdem als Montageelement zum Befestigen des Sauggreifers an der Handhabungsvorrichtung ausgebildet ist. Somit kann beim Anschließen des Sauggreifers an die Handhabungsvorrichtung sichergestellt werden, dass der Sauggreifer nur in einer bestimmten Orientierung an der Handhabungsvorrichtung befestigt werden kann. Die Handhabungsvorrichtung kennt dann einen Nullpunkt für die Orientierung der Saugplatte und kann die Saugplatte dann beim Handhaben der Werkstücke entsprechend ausrichten.

Um den erfindungsgemäßen Sauggreifer für einen weiteren Bereich von unterschiedlichen Krümmungsradien von Werkstückoberflächen, also insbesondere für unterschiedlich dicke Stangen und Rohre nutzbar zu machen, als dies alleine durch eine voluminöse umlaufende Dichtung oder durch die Elastizität des Saugplattenmaterials möglich ist, ist es im Rahmen der vorliegenden Erfindung besonders bevorzugt, wenn die Saugplatte aus mehreren, über Scharniere miteinander verbundenen Segmenten besteht. Die Scharniere verlaufen hierbei bevorzugt entlang der axialen Richtung der Saugplatte. Die Segmentierung der Saugplatte mittels Scharnieren ermöglicht die Anpassung der Saugplatte an Werkstücke mit einem großen Bereich von Wölbungsradien ihrer Oberfläche, bis hin zu im Wesentlichen ebenen Oberflächen, wenn die Segmente vorzugsweise durch Aufschwenken der Scharniere eine nahezu oder im Wesentlichen ebene Saugplatten-Innenseite bilden können.

Die Ausbildung der erfindungsgemäßen Saugplatte mit mehreren, über Scharniere miteinander verbundenen Segmenten vereinigt die Vorteile einer erfindungsgemäßen Saugplatte mit hoher Haltekraft und eines herkömmlichen Sauggreifers mit einer Mehrzahl von Saugnäpfen, die über entsprechende Hebelanordnungen in der Lage sind, sich insgesamt unterschiedlichen Wölbungen einer Werkstückoberfläche anzupassen.

Die Scharniere im Sinne der vorliegenden Erfindung können als verbindendes Gelenk ausgebildet sein. Je nach dem für die erfindungsgemäße Saugplatte verwendeten Material können die Scharniere auch als Filmscharnier, als Faltenbalg oder als Streifen aus flexiblerem Material ausgebildet sein.

Die Segmente einer solchen erfindungsgemäß bevorzugten Saugplatte können eine in der Radialebene im Wesentlichen konkav gewölbte Innenfläche aufweisen und in der axialen Richtung geradlinig verlaufen, sie können jedoch auch eine jeweils im Wesentlichen ebene Innenfläche aufweisen. Dies hängt davon ab, wie kleinteilig die Segmente ausgebildet werden, um die erfindungsgemäße konkave Grundform der Saugplatte zu bilden, und wie elastisch das Material ist, aus dem die Segmente bestehen. Es kann auch ein Teil der Segmente, beispielsweise ein größeres zentrales Segment, das vorzugsweise die Durchführung für den Vakuumanschluss enthält, mit konkav gewölbter Innenfläche ausgebildet sein, während andere Segmente derselben Saugplatte im Wesentlichen ebene Innenflächen aufweisen. Die Segmente können auch aus unterschiedlichen Materialien bestehen.

Bevorzugt sind die Segmente einer segmentierten Saugplatte solcherart gegeneinander elastisch vorgespannt, dass die Saugplatte ohne Last in ihrer konkaven Grundform verbleibt oder in diese zurückkehrt. Dadurch ist sichergestellt, dass Werkstücke mit der größtmöglichen, vom erfindungsgemäßen Sauggreifer noch zu greifenden Wölbung durch einfaches Aufsetzen des Sauggreifers gegriffen werden können, während die Segmente gegen die elastische Vorspannung aufschwenken, wenn der Sauggreifer auf ein Werkstück aufgesetzt wird, dessen Oberflächenkrümmung geringer ist - gegebenenfalls bis hin zur ebenen Oberfläche.

Je nach Anwendungsfall können die Segmente einer segmentierten Saugplatte auch solcherart gegeneinander elastisch vorgespannt sein, dass die Saugplatte ohne Last in einer ebenen oder weitestmöglich geöffneten konkaven Grundform verbleibt oder in diese zurückkehrt, während die Segmente dann gegen die elastische Vorspannung zuschwenken, wenn der Sauggreifer auf ein Werkstück aufgesetzt wird.

Bevorzugt besitzt die umlaufende Dichtung an der segmentierten Saugplatte des erfindungsgemäßen Sauggreifers eine Materialstärke, mit der Unstetigkeiten der Saugplatte beim Übergang von einem ersten zu einem zweiten Scharnier ausgeglichen werden. Wenn die oder einige Segmente eine in der Radialebene im Wesentlichen konkav gewölbte Innenfläche aufweisen, ist die umlaufende Dichtung vorzugsweise aufgrund ihrer Materialstärke auch in der Lage, Abweichungen der Saugplatten-Innenseite von einer Ebene auszugleichen.

Um die Saugtasche, die an der Innenseite einer segmentierten Saugplatte gebildet ist, gegen Eindringen von Falschluft zu schützen, sind die Scharniere, wenn sie nicht in dichter Bauweise, wie z.B. als Filmscharnier oder Faltenbalg oder dergleichen ausgebildet sind, sondern aus zwei Scharnierhälften bestehen, zweckmäßigerweise mit Scharnierdichtungen versehen. Dies kann insbesondere so aussehen, dass die Scharniere an einer Scharnierhälfte ein Hebelelement und an der anderen Scharnierhälfte ein Gegendruckelement aufweisen. Das Hebelelement und/oder das Gegendruckelement ist dann mit einem Aufnahmeraum für einen weichelastischen Dichtungsstreifen versehen.

Der Aufnahmeraum ist vorzugsweise solcherart ausgebildet, dass der Dichtungsstreifen zumindest beim Aufschwenken des Scharniers zwischen dem Hebelelement und dem Gegendruckelement zusammengedrückt wird. Der Aufnahmeraum für den Dichtungsstreifen ist bevorzugt zur Stirnseite der Saugplatte hin offen, um ein Einschieben des Dichtungsstreifens in den Aufnahmeraum zu ermöglichen und diesen gegebenenfalls auch austauschen zu können. Der Dichtungsstreifen kann insbesondere auch dazu vorgesehen sein, eine elastische Vorspannung der Segmente gegeneinander zu erzeugen, wenn die Saugplatte ohne Last in einer konkaven Grundform verbleiben oder in diese zurückkehren soll.

Um einen solchen Dichtungsstreifen in den Aufnahmeraum in das Hebelelement und/oder in das Gegendruckelement der Segmente einschieben zu können, ist es bevorzugt, dass der Aufnahmeraum so großzügig bemessen ist, dass der Dichtungsstreifen ohne großen Widerstand eingeschoben werden kann. Um zu verhindern, dass dies die Dichtfunktion des Dichtungsstreifens im Scharnier beeinträchtigt, kann ein zusätzliches Klemmstück zum zusätzlichen Einschieben in den Aufnahmeraum vorgesehen sein, um den Dichtungsstreifen vorzukomprimieren.

Die erfindungsgemäße Saugplatte ist bevorzugt als Kunststoff-Formteil hergestellt, und zwar vorzugsweise mittels selektiven Lasersinterns. Dieses Verfahren ermöglicht insbesondere, einen erfindungsgemäßen Sauggreifer mit segmentierter Saugplatte solcherart herzustellen, dass die Segmente an den Scharnieren unlösbar miteinander verbunden sind, und zwar auch dann, wenn das Scharnier aus zwei Scharnierhälften gebildet wird. Denn beim selektiven Lasersintern wird die Saugplatte in einem generativen Schichtbauverfahren Schicht für Schicht in ein Kunststoffpulver eingeschmolzen.

Das Herstellen der Saugplatte mittels selektiven Lasersinterns kann weitere Vorteile bieten, wie beispielsweise das Herstellen von nicht zusammenhängenden Teilen, wie z.B. einen im Aufnahmeraum gefangenen Federstreifen zum vorkomprimieren eines Dichtungsstreifens. Auch die Fertigung von einstückigen Scharnieren, wie z.B. Filmscharnieren oder Scharnieren, die durch faltenbalgähnliche Materialabschnitte gebildet werden, sind in ein und demselben Herstellungsprozess mit selektivem Lasersintern herstellbar.

Ein mittels selektiven Lasersinterns hergestelltes Kunststoff-Formteil besitzt in der Regel eine Grundelastizität, die bei der Verwendung im Rahmen einer erfindungsgemäßen Saugplatte, ob segmentiert oder nicht, von großem Vorteil ist; denn diese Grundelastizität stellt bereits eine gewisse Anpassbarkeit der Saugplatte an die Oberfläche des zu greifenden Werkstücks sicher.

Ein Ausführungsbeispiel für einen erfindungsgemäßen Sauggreifer wird im Folgenden anhand der beigefügten Zeichnungen näher beschrieben und erläutert. Es zeigen:
- Figur 1: eine isometrische Ansicht eines erfindungsgemäß ausgestalteten Sauggreifers von schräg oben;
- Figur 2: zwei Segmente des Sauggreifers in einer Detailansicht;
- Figur 3: eine isometrische Ansicht eines erfindungsgemäß ausgestalteten Sauggreifers von schräg unten.

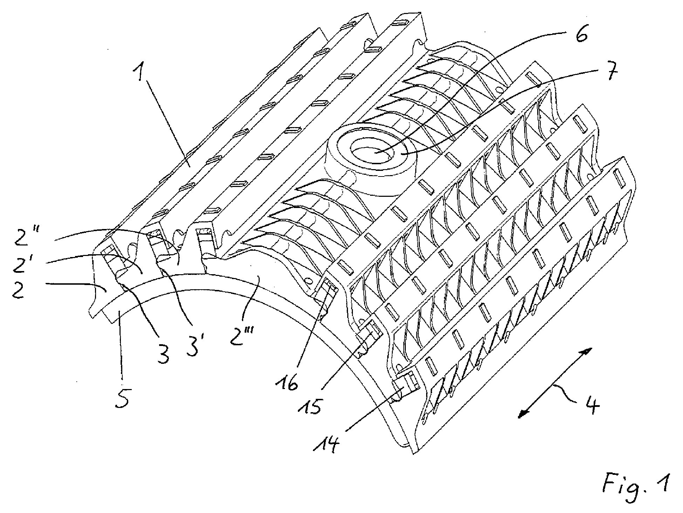

Das in Figur 1 dargestellte Ausführungsbeispiel eines erfindungsgemäßen Sauggreifers umfasst eine Saugplatte 1, die aus mehreren Segmenten 2, 2', 2" zusammengesetzt ist. Diese Segmente sind untereinander mit Scharnieren 3, 3' verbunden, welche entlang einer axialen Richtung 4 der Saugplatte 1 verlaufen.

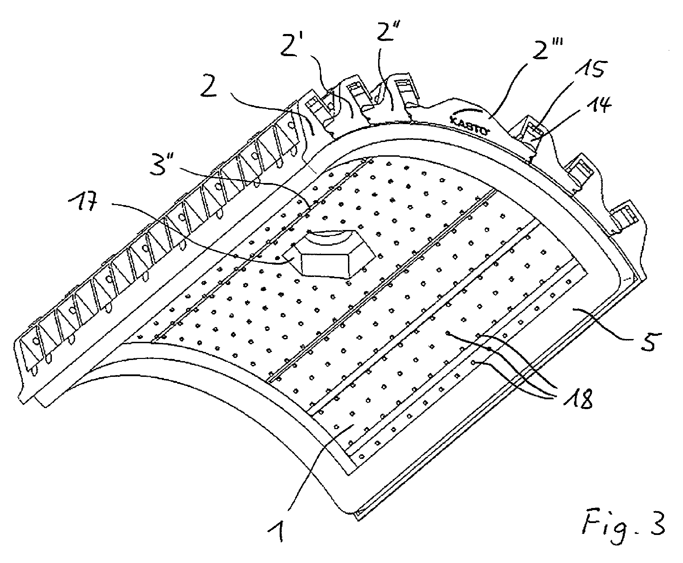

An der in Figur 3 sichtbaren, unten liegenden Innenseite der Saugplatte 1 ist randseitig umlaufend eine Dichtung 5 angebracht, um eine in Projektion rechteckige Saugtasche zu umschreiben. Wie wiederum Figur 1 verdeutlicht, befindet sich in einem zentralen Segment 2'" der Saugplatte 1 eine Durchführung 6, um die Saugtasche mit einer (nicht dargestellten) Vakuumeinrichtung verbinden zu können. Diese Durchführung 6 dient gleichzeitig als Montageelement zum Befestigen der Saugplatte 1 an einer (ebenfalls nicht dargestellten) Handhabungsvorrichtung, beispielsweise einem Knickarmroboter oder einem Kran. Unterhalb eines Halterings 7 an der Durchführung 6 ist ein Sechskant 17 (Figur 3) eingeformt, so dass die Saugplatte 1 lagerichtig orientiert an der Handhabungsvorrichtung montiert werden kann bzw. muss.

Die Segmente 2, 2', 2", 2'" der Saugplatte 1 des vorliegenden Ausführungsbeispiels sind entlang der axialen Richtung 4 der Saugplatte 1 geradlinig geformt, während sie in einer senkrecht zur axialen Richtung 4 stehenden Radialebene an ihrer Innenseite jeweils eine konkave Wölbung aufweisen. Die Segmente 2, 2', 2", 2'" sind hierbei solcherart gegeneinander elastisch vorgespannt, dass die Saugplatte 1 in Ruhe insgesamt eine Grundform einnimmt, die einer maximalen Krümmung in der Radialebene entspricht. Diese Grundform ist in den Figuren 1 und 3 dargestellt.

Wenn die Saugplatte 1 auf ein Werkstück mit zylindrischer Oberfläche aufgesetzt wird, desen Krümmungsradius größer ist als derjenige der Grundform der Saugplatte 1, schwenken die Scharniere 3, 3' beim Kontakt mit dem Werkstück so weit auf, bis die Innenseite der Saugplatte 1 eine konkave Wölbung einnimmt, die der Oberfläche des Werkstücks in etwa entspricht. Die Dichtung 5 legt sich dann auf die Oberfläche des Werkstücks und gleicht Unstetigkeiten beim Übergang von einem Segment 2 auf ein nächstes Segment 2' sowie die leicht von der Werkstückoberfläche abweichende Wölbung der Segmente 2, 2', 2" aus, so dass sich an der Innenseite der Saugplatte 1 eine Saugtasche bildet, die eine sehr große Fläche, jedoch nur ein geringes Volumen aufweist. Entsprechend hohe Haltekräfte bei gleichwohl geringen Anforderungen an die Vakuumeinrichtung und/oder die Dichtheit der Saugtasche werden somit erreicht.

Die Scharniere 3, 3' des vorliegenden Ausführungsbeispiels können so weit aufschwenken, bis die Saugplatte 1 eine nahezu ebene Form an ihrer Innenseite einnimmt. Abweichungen von der Ebene werden wiederum durch die Dichtung 5 ausgeglichen, so dass die dargestellte Saugplatte 1 gegebenenfalls auch ebene Werkstücke greifen kann.

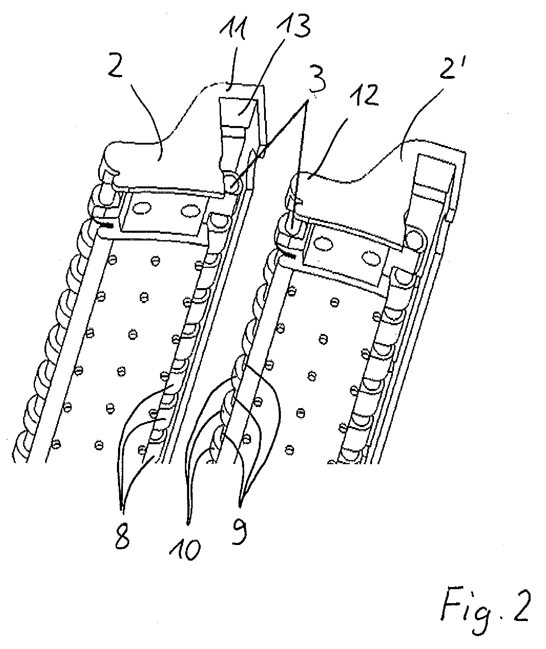

Die Ausbildung der Scharniere 3 zwischen den einzelnen Segmenten 2, 2' der Saugplatte 1 ist in Figur 2 verdeutlicht. In dieser Figur sind zwei Segmente 2, 2' teilweise und voneinander separiert dargestellt, und zwar in einer Ansicht von schräg unten. Hierbei wird deutlich, dass die Scharniere 3 in der Art eines Stangenscharniers ausgebildet sind, mit einer Mehrzahl von Buchsen 8 und einer Mehrzahl von formschlüssig in diese eingreifenden Stiften 9. Die Stifte 9 sind durch Abstandselemente 10 voneinander getrennt, um sicherzustellen, dass das Scharnier 3 nur einen Freiheitsgrad hat.

An den Scharnieren 3, 3' sind die Segmente 2, 2' solcherart geformt, dass eine Scharnierhälfte mit einem Hebelelement 11 und die andere Scharnierhälfte mit einem Gegendruckelement 12 ausgestattet sind. Diese Elemente sind vorliegend an die Segmente 2, 2' angeformt.

Im Hebelelement 11 ist ein entlang des Scharniers 3 durchgehender Aufnahmeraum 13 gebildet, in den ein weichelastischer Dichtungsstreifen 14 (Figur 1) eingeschoben werden kann. Dieser Dichtungsstreifen erstreckt sich über die gesamte axiale Ausdehnung der Saugplatte 1 und dichtet das Scharnier 3 ab, um ein Eindringen von Umgebungsluft in die Saugtasche der Saugplatte 1 durch die Scharniere 3 zu verhindern oder reduzieren.

Der Dichtungsstreifen 14 ist im Aufnahmeraum 13 solcherart zwischen dem Hebelelement 11 und dem Gegendruckelement 12 eines Scharniers 3 angeordnet, dass bei einem Aufschwenken des Scharniers 3 der Dichtungsstreifen 14 zwischen dem Hebelelement 11 eines ersten Segments 2 und dem Gegendruckelement 12 eines benachbarten Segments 2' zusammengedrückt wird. Dies stellt nicht nur die Dichtungswirkung des weichelastischen Dichtungsstreifens 14 sicher, sondern führt auch zu einer elastischen Rückstellkraft zwischen den Segmenten 2, 2', die die Saugplatte 1 in ihrer Grundform hält oder wieder in diese zurückführt, und die im vorliegenden Ausführungsbeispiel erwünscht ist.

Um ein leichtes Einführen des weichelastischen Dichtungsstreifens 14 in den Aufnahmeraum 13 sowie eine Austauschbarkeit des Dichtungsstreifens 14 zu gewährleisten, ist dieser allerdings mit Abmessungen versehen, mit denen er in der Grundform der Saugplatte 1 nicht den gesamten Aufnahmeraum 13 ausfüllt. Daher ist im vorliegenden Ausführungsbeispiel vorgesehen, zusätzlich, zusammen mit dem Dichtungsstreifen 14 und vom Scharnier 3 weg orientiert, einen Federstreifen 15 einzusetzen, von dem in Figur 1 die Stirnseite zu erkennen ist.

Um eine Vorkomprimierung des Dichtungsstreifens 14 auch in der Grundform der Saugplatte 1 sicherzustellen, wie sie in Figur 1 dargestellt ist, können stirnseitig in den Aufnahmeraum 13 Keile 16 eingesetzt werden, die den Federstreifen 15 nach unten zum Scharnier 3 hin verlagern, so dass dieser über die gesamte axiale Ausdehnung der Druckplatte 1 für eine Vorkomprimierung des weichelastischen Dichtungsstreifens 14 sorgt. Anstelle der Keile 16 können auch flache Distanzstücke eingesetzt werden.

Wie Figur 3 schließlich zeigt, ist die von der umlaufenden Dichtung 5 umschlossene Saugtasche an der Innenseite der Saugplatte 1 mit einer Anzahl von Noppen 18 versehen. Diese verhindern, dass die Innenseite der Saugplatte 1 sich so eng an die Oberfläche eines anzuhebenden Werkstücks anlegen kann, dass nicht mehr das gesamte Volumen der Saugtasche mit der Durchführung 6 in Verbindung stehen würde.

Das in den Figuren dargestellte Ausführungsbeispiel für einen erfindungsgemäßen Sauggreifer 1 ist, bis auf die Dichtung 2 und die Dichtstreifen 14, aber zusammen mit den Federstreifen 15 und den Keilen 16, die separat eingesetzt werden, mittels selektiven Lasersinterns als Formteil aus einem PolyamidWerkstoff mit typischerweise 48 N/mm² Zugfestigkeit hergestellt. Versuche der Anmelderin mit diesem Ausführungsbeispiel ergaben bei Abmessungen der Saugplatte 1 von in der Projektion ca. 15 x 15 cm² eine Tragkraft von mindestens 400 N.

## Patentansprüche

1. Sauggreifer für eine Handhabungsvorrichtung zum Handhaben von Werkstücken mit einer zylindrischen oder einer Zylinderform angenäherten Form, mit einem Vakuumanschluss zur Verbindung einer Saugtasche des Sauggreifers mit einer Vakuumeinrichtung,
**gekennzeichnet durch** eine Saugplatte (1), deren Grundform der Oberfläche der zu greifenden Werkstücke angepasst ist und eine Innenseite aufweist, die in einer axialen Richtung (4) im Wesentlichen geradlinig und in einer senkrecht zur axialen Richtung (4) stehenden Radialebene mit einer im wesentlichen konkaven Wölbung geformt ist, wobei an der Innenseite der Saugplatte (1) eine umlaufende Dichtung (5) angebracht ist, um innerhalb der umlaufenden Dichtung (5) eine Saugtasche an der Innenseite der Saugplatte (1) zu bilden.

2. Sauggreifer nach Anspruch 1,
wobei die Saugplatte 1 aus flexiblem Material besteht.

3. Sauggreifer nach Anspruch 1,
wobei die Saugplatte (1) aus mehreren, über Scharniere (3, 3') miteinander verbundenen Segmenten (2, 2', 2", 2"') besteht.

4. Sauggreifer nach Anspruch 3,
wobei die Scharniere (3) entlang der axialen Richtung (4) der Saugplatte (1) verlaufen.

5. Sauggreifer nach einem der Ansprüche 3 oder 4,
wobei die Segmente (2) eine in der Radialebene im Wesentlichen konkav gewölbte Innenfläche aufweisen und in der axialen Richtung (4) geradlinig verlaufen.

6. Sauggreifer nach einem der Ansprüche 3 oder 4,
wobei die Segmente (2) eine im Wesentlichen ebene Innenfläche aufweisen.

7. Sauggreifer nach mindestens einem der Ansprüche 1 bis 6,
wobei der Vakuumanschluss im Wesentlichen mittels einer Durchführung (6) in der Saugplatte (1) gebildet ist.

8. Sauggreifer nach Anspruch 7,
wobei die Durchführung (6) außerdem als Montageelement zum Befestigen der Saugplatte (1) an einer Handhabungsvorrichtung ausgebildet ist.

9. Sauggreifer nach mindestens einem der Ansprüche 3 bis 8,
wobei die Segmente (2) solcherart miteinander verbunden sind, dass sie durch Aufschwenken der Scharniere (3) eine nahezu oder im Wesentlichen ebene Saugplatten-Innenseite bilden können.

10. Sauggreifer nach mindestens einem der Ansprüche 3 bis 9,
wobei die Segmente (2) solcherart gegeneinander elastisch vorgespannt sind, dass die Saugplatte (1) ohne Last in ihrer Grundform verbleibt oder in diese zurückkehrt.

11. Sauggreifer nach mindestens einem der Ansprüche 3 bis 9,
wobei die Segmente (2) solcherart gegeneinander elastisch vorgespannt sind, dass die Saugplatte (1) ohne Last in einer möglichst weit aufgeschwenkten Grundform verbleibt oder in diese zurückkehrt.

12. Sauggreifer nach mindestens einem der Ansprüche 3 bis 11,
wobei die umlaufende Dichtung (5) an der Saugplatte (1) eine Materialstärke besitzt, mit der Unstetigkeiten der Saugplatte (1) beim Übergang von einem ersten zu einem zweiten Segment (2, 2') ausgleichbar sind.

13. Sauggreifer nach den Ansprüchen 5, 9 und 12,
wobei die umlaufende Dichtung (5) an der Saugplatte (1) eine Materialstärke besitzt, mit der Abweichungen der Saugplatten-Innenseite von einer Ebene aufgrund der konkav gewölbten Innenflächen der Segmente (2) ausgleichbar sind.

14. Sauggreifer nach mindestens einem der Ansprüche 3 bis 13,
wobei die Scharniere (3) mit Scharnierdichtungen versehen sind.

15. Sauggreifer nach mindestens einem der Ansprüche 3 bis 14,
wobei die Segmente (2) solcherart geformt sind, dass die Scharniere (3) aus zwei Scharnierhälften bestehen und an einer Scharnierhälfte ein Hebelelement (11) und an der anderen Scharnierhälfte ein Gegendruckelement (12) aufweisen, wobei das Hebelelement (11) und/oder das Gegendruckelement (12) mit einem Aufnahmeraum (13) für einen weichelastischen Dichtungsstreifen (14) versehen ist, der solcherart ausgebildet ist, dass der Dichtungsstreifen (14) zumindest beim Aufschwenken des Scharniers (3) zwischen dem Hebelelement (11) und dem Gegendruckelement (12) zusammendrückbar ist.

16. Sauggreifer nach Anspruch 15,
wobei der Aufnahmeraum (13) sich zur Stirnseite der Saugplatte (1) hin öffnet, um ein Einschieben des Dichtungsstreifens (14) in den Aufnahmeraum (13) zu ermöglichen.

17. Sauggreifer nach den Ansprüchen 15 und 16,
wobei ein Federstreifen (15) im Aufnahmeraum oder zum zusätzlichen Einschieben in den Aufnahmeraum (13) vorgesehen ist, um den Dichtungsstreifen (14) vorzukomprimieren.

18. Sauggreifer nach den Ansprüchen 10 und 17 oder 11 und 17,
wobei der Dichtungsstreifen (14) dazu vorgesehen ist, die elastische Vorspannung der Segmente (2) gegeneinander zu erzeugen.

19. Sauggreifer nach mindestens einem der Ansprüche 1 bis 18,
wobei die Saugplatte (1) als Kunststoff-Formteil hergestellt ist, vorzugsweise mittels selektiven Lasersinterns.

## Geänderte Patentansprüche

### Geänderte Patentansprüche gemäss Regel 137(2) EPÜ.

1. Sauggreifer für eine Handhabungsvorrichtung zum Handhaben von Werkstücken mit einer zylindrischen oder einer Zylinderform angenäherten Form, mit einem Vakuumanschluss zur Verbindung einer Saugtasche des Sauggreifers mit einer Vakuumeinrichtung, mit einer Saugplatte (1), deren Grundform der Oberfläche der zu greifenden Werkstücke angepasst ist und eine Innenseite aufweist, die in einer axialen Richtung (4) im Wesentlichen geradlinig und in einer senkrecht zur axialen Richtung (4) stehenden Radialebene mit einer im wesentlichen konkaven Wölbung geformt ist, wobei an der Innenseite der Saugplatte (1) eine umlaufende Dichtung (5) angebracht ist, um innerhalb der umlaufenden Dichtung (5) eine Saugtasche an der Innenseite der Saugplatte (1) zu bilden, wobei die Saugplatte (1) aus mehreren, über Scharniere (3, 3') miteinander verbundenen Segmenten (2, 2', 2", 2''') besteht, welche entlang der axialen Richtung (4) der Saugplatte (1) verlaufen,
**dadurch gekennzeichnet,**
**dass** die Scharniere (3, 3') aus zwei Scharnierhälften bestehen.

2. Sauggreifer nach Anspruch 1,
wobei die Segmente (2) eine in der Radialebene im Wesentlichen konkav gewölbte Innenfläche aufweisen und in der axialen Richtung (4) geradlinig verlaufen.

3. Sauggreifer nach einem der Ansprüche 1 oder 2,
wobei die Segmente (2) eine im Wesentlichen ebene Innenfläche aufweisen.

4. Sauggreifer nach mindestens einem der Ansprüche 1 bis 3,
wobei der Vakuumanschluss im Wesentlichen mittels einer Durchführung (6) in der Saugplatte (1) gebildet ist.

5. Sauggreifer nach Anspruch 4,
wobei die Durchführung (6) außerdem als Montageelement zum Befestigen der Saugplatte (1) an einer Handhabungsvorrichtung ausgebildet ist.

6. Sauggreifer nach mindestens einem der Ansprüche 1 bis 5,
wobei die Segmente (2) solcherart miteinander verbunden sind, dass sie durch Aufschwenken der Scharniere (3) eine nahezu oder im Wesentlichen ebene Saugplatten-Innenseite bilden können.

7. Sauggreifer nach mindestens einem der Ansprüche 1 bis 6,
wobei die Segmente (2) solcherart gegeneinander elastisch vorgespannt sind, dass die Saugplatte (1) ohne Last in ihrer Grundform verbleibt oder in diese zurückkehrt.

8. Sauggreifer nach mindestens einem der Ansprüche 1 bis 6,
wobei die Segmente (2) solcherart gegeneinander elastisch vorgespannt sind, dass die Saugplatte (1) ohne Last in einer möglichst weit aufgeschwenkten Grundform verbleibt oder in diese zurückkehrt.

9. Sauggreifer nach mindestens einem der Ansprüche 1 bis 8,
wobei die umlaufende Dichtung (5) an der Saugplatte (1) eine Materialstärke besitzt, mit der Unstetigkeiten der Saugplatte (1) beim Übergang von einem ersten zu einem zweiten Segment (2, 2') ausgleichbar sind.

10. Sauggreifer nach den Ansprüchen 2, 6 und 9,
wobei die umlaufende Dichtung (5) an der Saugplatte (1) eine Materialstärke besitzt, mit der Abweichungen der Saugplatten-Innenseite von einer Ebene aufgrund der konkav gewölbten Innenflächen der Segmente (2) ausgleichbar sind.

11. Sauggreifer nach mindestens einem der Ansprüche 1 bis 10,
wobei die Scharniere (3) mit Scharnierdichtungen versehen sind.

12. Sauggreifer nach mindestens einem der Ansprüche 1 bis 11,
wobei die Segmente (2) solcherart geformt sind, dass die Scharniere (3) aus zwei Scharnierhälften bestehen und an einer Scharnierhälfte ein Hebelelement (11) und an der anderen Scharnierhälfte ein Gegendruckelement (12) aufweisen, wobei das Hebelelement (11) und/oder das Gegendruckelement (12) mit einem Aufnahmeraum (13) für einen weichelastischen Dichtungsstreifen (14) versehen ist, der solcherart ausgebildet ist, dass der Dichtungsstreifen (14) zumindest beim Aufschwenken des Scharniers (3) zwischen dem Hebelelement (11) und dem Gegendruckelement (12) zusammendrückbar ist.

13. Sauggreifer nach Anspruch 12,
wobei der Aufnahmeraum (13) sich zur Stirnseite der Saugplatte (1) hin öffnet, um ein Einschieben des Dichtungsstreifens (14) in den Aufnahmeraum (13) zu ermöglichen.

14. Sauggreifer nach den Ansprüchen 12 und 13,
wobei ein Federstreifen (15) im Aufnahmeraum oder zum zusätzlichen Einschieben in den Aufnahmeraum (13) vorgesehen ist, um den Dichtungsstreifen (14) vorzukomprimieren.

15. Sauggreifer nach den Ansprüchen 7 und 14 oder 8 und 14,
wobei der Dichtungsstreifen (14) dazu vorgesehen ist, die elastische Vorspannung der Segmente (2) gegeneinander zu erzeugen.

16. Sauggreifer nach mindestens einem der Ansprüche 1 bis 15,
wobei die Saugplatte (1) als Kunststoff-Formteil hergestellt ist, vorzugsweise mittels selektiven Lasersinterns.
